# EUROPÄISCHE PATENTSCHRIFT

(11) **EP 0 963 594 B1**
(45) Veröffentlichungstag und Bekanntmachung des Hinweises auf die Patenterteilung: **11.12.2002**
(21) Anmeldenummer: 98907884.5
(22) Anmeldetag: 05.02.1998
(51) Int. Cl.: H01H 47/00

(54) **MODULARES SICHERHEITSSCHALTGERÄT**
MODULAR SAFETY SWITCH
COMMUTATEUR DE SECURITE MODULAIRE

(30) Priorität: 25.02.1997 DE 19707241
(43) Veröffentlichungstag der Anmeldung: 15.12.1999
(73) Patentinhaber: PILZ GmbH & CO., 73760 Ostfildern (DE)
(72) Erfinder: VEIL, Richard, D-70597 Stuttgart (DE); GRÄF, Winfried, D-73732 Esslingen (DE)
(74) Vertreter: Lindner, Michael, Dipl.-Ing.
(86) Internationale Anmeldenummer: DE9800313
(87) Internationale Veröffentlichungsnummer: WO98038664

(56) Entgegenhaltungen:
- EP-A- 0 505 774
- US-A- 4 762 663

## Beschreibung

In dem Maße, in dem Produktions- oder Fertigungsabläufe automatisiert durch komplexe Maschinen oder Roboter durchgeführt werden, erhöhen sich die Sicherheitsanforderungen. Die heute üblichen Maschinen und Roboter laufen weitgehend vollautomatisch gesteuert, besitzen aber insoweit keine Intelligenz, als dass sie erkennen können, ob sich Menschen in gefährlicher Nähe befinden können. Um dennoch Gefährdungen auszuschließen, sind die Anlagen oder Anlagenteile durch Schutzzäune, Abdeckhauben und ähnliches gesichert. Um Zugang zu den entsprechenden Maschinenteilen zwecks Wartung und Einrichtung zu bekommen, sind in den Schutzzäunen Türen enthalten und die Abdeckhauben zu öffnen.

Naturgemäß geht die Sicherung durch den Schutzzaun verloren, sobald die Tür geöffnet ist, weshalb durch unabhängige Sicherheitsschaltgeräte der Zustand der Türen überwacht werden muss, um rechtzeitig die Maschine stillzusetzen. Sinngemäß Ähnliches gilt für Maschinenhauben, beispielsweise bei Blasformeinrichtungen, Spritzgießmaschinen oder Bearbeitungszentren.

Die Anforderungen an die Sicherheit der Zustandserkennung sind von Maschinentyp zu Maschinentyp und Anlage zu Anlage unterschiedlich, weshalb zur Zustandsüberwachung unterschiedliche Meldegeräte zum Einsatz kommen. Das einfachste Meldegerät besteht aus einem einfachen Ruhekontakt, der zur überwachung selten zu öffnender Wartungsklappen verwendet wird. Das komplizierteste Meldegerät enthält zwei Sätze von Schaltern, wobei jeder Satz einen Ruhe- und einen Arbeitskontakt aufweist. Solche komplizierten Meldegeräte werden bei besonders hohen Anforderungen an die Sicherheit eingesetzt, wenn beispielsweise zusätzlich nach einer Spannungswiederkehr eine Schaltertestung durchgeführt werden muss.

Ähnliche Anforderungen gelten im Zusammenhang mit NOT-AUS-Schaltern, bei denen es ebenfalls unterschiedliche Sicherheitsstufen gibt, was sich in entsprechend komplizierten Meldegeräten niederschlägt.

Das eigentliche Sicherheitsschaltgerät ist in der Regel eine zweikanalige elektronische Schaltung, bei der sich die Kanäle gegenseitig überwachen. Ein Beispiel für ein derartiges Sicherheitsschaltgerät ist in der EP-A-0 505 774 gezeigt.

Das bekannte Sicherheitsschaltgerät weist zwei Kanäle auf, von denen jeder eingangsseitig mit einem entsprechenden Meldegerät in Gestalt eines Schalters als Schließer verbunden ist. Um Fehlschaltungen zu verhindern, die entstehen, wenn einer der Schalter betätigt wird, während der andere seinen Zustand beibehält, sind in den beiden Kanälen jeweils Zeitfenster realisiert. Mit Hilfe der Zeitfenster wird überwacht, ob die Betätigung des Schalters des jeweils anderen Kanals innerhalb des Zeitfensters erfolgt. Andernfalls geht das Gerät auf Störung und verhindert ein Ingangsetzen der auf diese Weise überwachten Maschine.

Der grundsätzliche Aufbau des Sicherheitsschaltgerätes ist von der Art der Schalter am Eingang weitgehend unabhängig. Gleichwohl muss eine Anpassung an die jeweils verwendeten Schalter erfolgen, beispielsweise an die Anzahl der Schalter oder den Typ, nämlich ob Ruhe- oder Arbeitskontakt oder ob geerdet oder nicht.

Deswegen ist die Zahlen der bereitzuhaltenden Sicherheitsschaltgeräte beachtlich, was die Lagerhaltungskosten erhöht und auch Schwierigkeiten beim Ersatz bzw. bei der Reparatur hervorruft.

Ein anderer beschrittener Weg bestand in der Verwendung von Jumpern, um das Sicherheitsschaltgerät an den jeweiligen Typ des Meldegeräts anzupassen. Zum Anschluß der Jumper sind zusätzliche Klemmen am Sicherheitsschaltgerät vorzusehen, was zu zusätzlichem, baulichem Aufwand und damit weiteren Kosten führt.

Ausgehend hiervon ist es Aufgabe der Erfindung, ein Sicherheitsschaltgerät zu schaffen, das zum Anschluss von Meldegeräten aus einem Satz von Meldegeräten geeignet ist und keine zusätzlichen Progammiermittel bspw. in Form von zusätzlichen Anschlüssen benötigt.

Erfindungsgemäß wird diese Aufgabe durch ein Sicherheitsschaltgerät mit den Merkmalen der Ansprüche 1, 2 oder 3 gelöst.

Das erfindungsgemäße Sicherheitsschaltgerät weist einen Satz von Eingängen und/oder Ausgängen auf, wobei jedem Meldegerät aus dem Satz der möglicherweise anschließbaren Meldegeräte ein oder mehrere Eingänge und/oder Ausgänge zugeordnet sind. Mit Hilfe einer Erkennungseinrichtung wird geprüft, ob die zu dem betreffenden Meldegerättyp gehörenden Eingänge und/oder Ausgänge und sonst keine Eingänge und/oder Ausgänge beschaltet sind. Auf diese Weise identifiziert das Sicherheitsschaltgerät den jeweiligen Typ des Meldegeräts und steuert intern seine Signalverarbeitung oder -weiterleitung. Zusätzliche Programmiermittel bspw. in Form von zusätzlichen Klemmen oder Anschlüssen sind also nicht notwendig. Das Sicherheitsschaltgerät erkennt alleine anhand der Verbindung der Ein- und Ansgänge den Typ des Meldegeräts.

Die Erkennungseinrichtung lässt sich verhältnismäßig einfach dadurch implementieren, dass eine Tabelle enthalten ist, in der angegeben ist, welche Eingänge und/oder Ausgänge in Kombination jeweils zulässigerweise beschaltet werden dürfen. Die Erkennungseinrichtung überprüft sämtliche Eingänge und/oder Ausgänge und vergleicht die bei der Prüfung erfassten Signale mit der Tabelle, die die zulässige Zuordnung enthält. Das Sicherheitsschaltgerät wird nur dann freigegeben, wenn bei der Überprüfung festgestellt wurde, dass nur zulässige Eingänge und/oder Ausgänge beschaltet sind und dass die zu einem Meldegerättyp gehörenden Eingänge und/oder Ausgänge sämtlichst mit dem Meldegerät verbunden sind. Dabei kann es notwendig sein, die Arbeitskontakte kurzzeitig durch Betätigen der Schutztür oder des NOT-AUS-Schalters zu schließen.

Bei einfachen Sicherheitsschaltern für selten benutzte Wartungsklappen und NOT-AUS-Schalter nach Kategorie 1 genügt es, wenn das Meldegerät von einem Schalter mit Ruhekontakt gebildet ist. Bei Ausführungen mit mehreren Meldestellen sind entsprechend viele Meldegeräte dieses Typs vorhanden.

Bei einer Schutztürüberwachung auf hohem Sicherheitsniveau einschließlich einer möglichen Querschlusserkennung im Verbindungskabel enthält das Meldegerät zwei Ruhekontakte, die entweder getrennt voneinander durch einen Nocken gesteuert werden oder die miteinander zwangsgekoppelt sind. Derartige Meldegeräte werden auch für NOT-AUS-Schalter nach Kategorie 4 eingesetzt.

Wenn eine hohe Sicherheit gewünscht ist, werden zur Schutztürüberwachung Meldegeräte mit einem Arbeits- und einem Ruhekontakt eingesetzt, die beide miteinander zwangsgeführt verbunden ist. Die gleiche Art von Meldegerät wird auch bei einer Anlauftestung eingesetzt, allerdings muss hier beispielsweise die Schutztür betätigt werden.

Schutzeinrichtungen bei Spritzgießmaschinen oder Blasformmaschinen erfordern Meldegeräte mit insgesamt drei Ruhekontakten je Kanal, wobei einer der Ruhekontakte mechanisch mit einem Hauptabsperrventil gekuppelt ist, um dessen Stellung zu erfassen, während die anderen beiden Ruhekontakte die Schutztür kontrollieren.

Schließlich sind Meldegeräte zur Schutztürsicherung bekannt, die zwei Sätze von Kontakten enthalten, wobei der eine Schalter ein Ruhekontakt und der andere Schalter ein Arbeitskontakt ist. Die Kontakte jedes Satzes sind miteinander zwangsgekoppelt.

Es versteht sich, dass diese Erkennungseinrichtung bei mehrkanaligen Sicherheitsschaltgeräten in jedem Kanal vorhanden ist, damit jeder Kanal unabhängig vom anderen die angeschlossenen Meldegeräte überprüfen kann. Zweckmäßigerweise vergleichen die beiden Kanäle das Ergebnis ihrer Überprüfungen und geben erst dann das Sicherheitsschaltgerät frei, wenn festgestellt wurde, dass beide Kanäle mit demselben Typ von Meldegerät fehlerfrei verbunden ist.

Im Übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 das Prinzipschaltbild eines zweikanaligen Sicherheitsschaltgerätes, das zur Erkennung des Meldegerätes geeignet ist,
Fig. 2 bis 9 unterschiedliche Ausführungen von Meldegeräten,
Fig. 10 die Zuordnungstabelle zwischen Eingang, Ausgang und Meldsgerättyp,

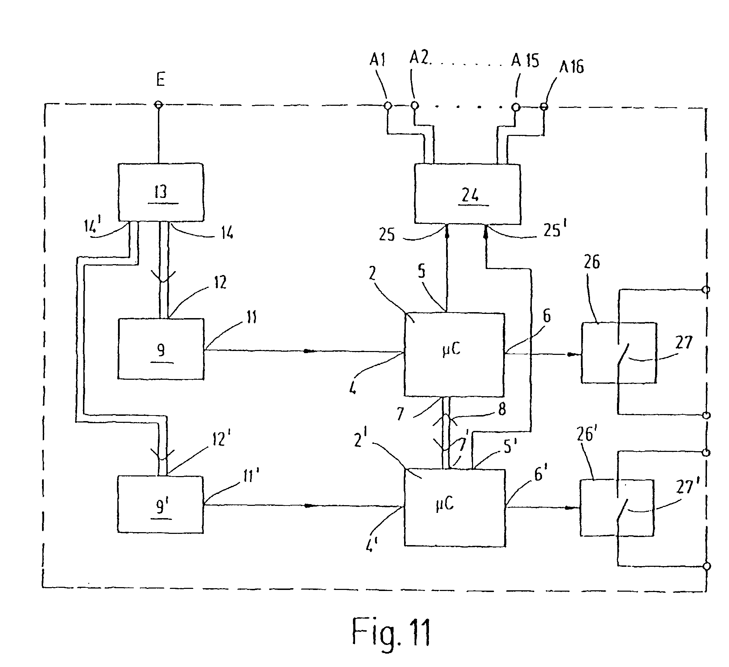

Fig. 11 das Prinzipschaltbild eines Ausführungsbeispiels eines Sicherheitsschaltgeräts mit lediglich unterschiedlichen Ausgängen für die einzelnen Meldegeräte und
Fig. 12 das Prinzipschaltbild eines Ausführungsbeispiels eines Sicherheitsschaltgeräts mit lediglich unterschiedlichen Eingängen für die einzelnen Meldegeräte.

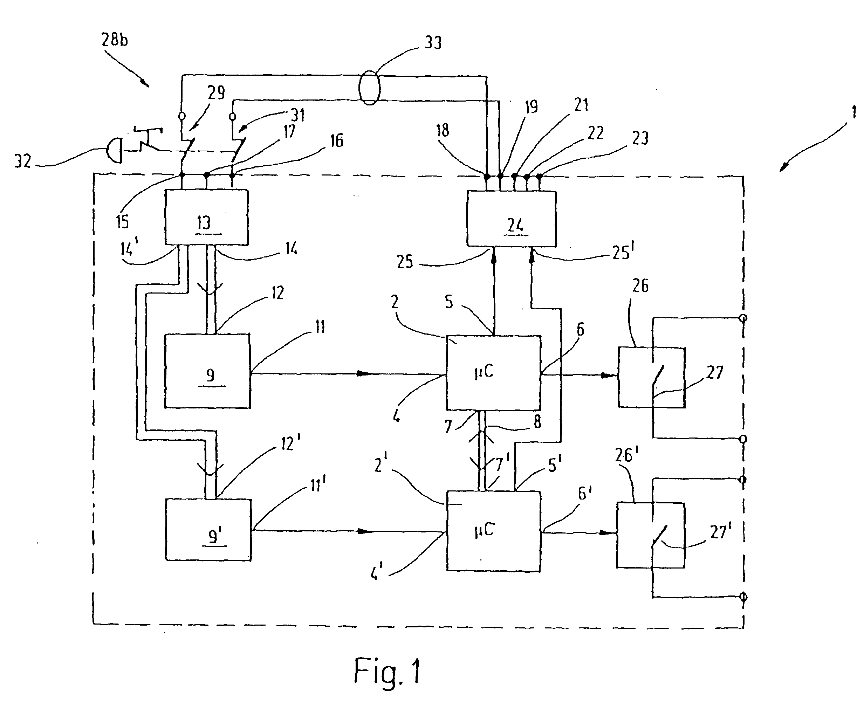

Fig. 1 zeigt das Prinzipschaltbild eines zweikanaligen Sicherheitsschaltgerätes 1. Das Sicherheitsschaltgerät 1 enthält als Kern zwei Mikrocontroller oder Mikrocomputer 2 und 2', die die eigentliche Überwachung und Auswertung ausführen.

Der Mikrocomputer 2 weist einen seriellen Eingang 4, einen Parallelausgang 5, einen seriellen Ausgang 6 sowie einen kombinierten Ein-/Ausgang 7 auf. In ähnlicher Weise ist der Mikrocomputer 2' aufgebaut, d.h. er weist dem Mikrocomputer 2 entsprechende Ein- und Ausgänge auf, die im Zusammenhang mit dem Mikrocomputer 2' mit demselben Bezugszeichen, ergänzt durch einen Apostroph, bezeichnet sind. Die kombinierten Ein-/Ausgänge 7 und 7' sind über eine Datenleitung 8 miteinander verbunden und gestatten es den beiden Mikrocomputern 2 und 2', miteinander zu korrespondieren und Daten auszutauschen.

An den seriellen Eingang 4 ist ein Schieberegister 9 mit seinem seriellen Ausgang 11 angeschlossen, das außerdem einen Paralleleingang 12 aufweist. Der Mikrocomputer 2' ist in ähnlicher Weise mit einem Schieberegisters 9' verbunden, und zwar liegt dessen serieller Ausgang 11' an dem seriellen Eingang 4'. Auch das Schieberegister 9' weist einen parallelen Eingang 12' auf.

An die parallelen Eingänge 12 und 12' der beiden Schieberegister 9 ist eine Interface-Baugruppe 13 angeschlossen, die Filter und Spannungspegelumsetzer von 24 V auf 5 V enthält. Die Interface-Baugruppe 13 ist über zwei parallele Ausgänge 14 und 14' mit den parallelen Eingängen 12 bzw. 12' der beiden Schieberegister 9, 9', wie gezeigt, verbunden. Ferner ist die Interface-Baugruppe 13 mit insgesamt drei einpoligen Eingängen 15, 16 und 17 versehen, die gleichzeitig die Eingänge des Sicherheitsschaltgerätes 1 darstellen.

Zu dem Sicherheitsschaltgerät 1 gehören ferner mehrere, in dem gezeigten Ausführungsbeispiel insgesamt fünf Signalausgänge 18...23, die einkanalige 24 V Ausgänge eines Ausgangstreiberblocks 24 sind, der mit seinen Eingängen 25 und 25' an den Ausgang 5 bzw. 5' der beiden Mikrocomputer 2 und 2' angeschlossen ist.

Schließlich gehören zu dem Sicherheitsgerät 1 noch zwei Ausgangsrelais 26 und 26', die über die seriellen Ausgänge 6 bzw. 6' angesteuert werden. Jedes der Ausgangsrelais 26 bzw. 26' enthält einen Arbeitskontakt 27 bzw. 27'. Diese Arbeitskontakte 27 und 27' sind zu Ausgangsklemmen des Sicherheitsschaltgerätes 1 hin verbunden und werden in den entsprechenden Steuerstrom- oder Versorgungsstromkreis der jeweils überwachten Maschine eingeschaltet.

Im gezeigten Ausführungsbeispiel dient das Sicherheitsschaltgerät 1 als NOT-AUS-Gerät und ist deswegen mit einem Meldegerät (= signalling device) 28b verbunden, das als Notausschalter dient. Das Meldegerät 28b umfasst zwei Ruhekontaktschalter 29 und 31, die miteinander zwangsgekoppelt sind und über einen Betätigungsknopf 32 manuell betätigt werden können.

Von dem Meldegerät 28b ist der Ruhekontaktschalter 29 mit einem Ende mit dem Eingang 15 und mit dem anderen Ende mit dem Ausgang 18 verbunden. Der andere Ruhekontaktschalter 31 liegt zwischen dem Eingang 17 und dem Ausgang 19, wobei die Verbindung zu den beiden Ausgängen 18 und 19 zweipolig erfolgt.

Das insoweit Sicherheitsschaltgerät 1 arbeitet wie folgt:

Wenn nach einer Unterbrechung der Spannungsversorgung für das Sicherheitsschaltgerät 1 die Versorgungsspannung wiederkehrt, durchlaufen die beiden Mikrocomputer 2 und 2' zunächst eine Erkennungsroutine, um die Art des Meldegerätes 28 zu identifizieren. Dazu gibt nach einer Absprache zwischen den beiden Mikrocomputern 2 und 2' zunächst der Mikrocomputer 2 eine entsprechende Signalfolge über seinen Ausgang 5 an den Ausgangstreiber 24. Durch diese Signalfolge werden zeitlich nacheinander und zeitlich einander ausschließend die Ausgänge 18...23 jeweils für eine kurze Zeit mit der Ausgangsspannung von 24 V beaufschlagt.

Der Mikrocomputer 2 veranlasst zunächst, dass an dem Ausgang 18 24 V anstehen. Diese 24 V gelangen über die Verbindungsleitung 33 zu dem geschlossenen Ruhekontakt 29 und von dort auf den Eingang 15 des Sicherheitsschaltgerätes 1. In dem Interface-Block 13 wird die ankommende Spannung von 24 V auf 5 V heruntergesetzt und außerdem wird das Signal gefiltert. Das so erhaltene Digitalsignal gelangt über die mehrpolige Verbindung zwischen dem Ausgang 14 und dem Ausgang 12 in das Schieberegister 9, das genauso viel Stufen hat wie das Sicherheitsschaltgerät 1 Eingänge, d.h. im vorliegenden Fall drei Stufen.

Über eine nicht weiter veranschaulichte Taktleitung liest der Mikrocomputer 2 das Schieberegister 9 seriell aus und erhält auf diese Weise die Information, dass an dem Eingang 15 24 V anliegen. Hieraus erkennt der Mikrocomputer 2, dass eine galvanische Verbindung zwischen dem Ausgang 18 und dem Eingang 15 besteht, sonst jedoch kein weiterer Eingang mit dem Ausgang 18 in Verbindung steht.

Als nächstes wird der Ausgang 18 abgeschaltet und statt dessen der Ausgang 19 auf 24 V gelegt. Sobald dies geschehen ist, überprüft der Mikrocomputer wiederum die Situation an den Eingängen 15 bis 17 in derselben Weise wie dies oben bereits erläutert ist. Da das Meldegerät 28 ordnungsgemäß angeschlossen ist, führt die Spannung von 24 V an den Ausgang 19 zu Eingangssignal an dem Eingang 16 über den geschlossenen Ruhekontakt 31, was der Mikrocomputer mit Hilfe des Interface-Blocks 13 und des als Parallel-Serien-Umsetzer dienenden Schieberegisters 9 erfährt.

Danach wird der Ausgang 19 abgeschaltet und stattdessen der Ausgang 21 auf 24 V gelegt. Sobald dies geschehen ist, überprüft der Mikrocomputer wiederum die Situation an den Eingängen 15 bis 17 in derselben Weise wie dies oben erläutert ist. Da das Meldegerät 28b ordnungsgemäß angeschlossen ist, führt die Spannung von 24 V an den Ausgang 21 zu keinem Eingangssignal an einem der Eingänge 15 bis 17. Dieselben Ergebnisse werden erzielt, wenn der Mikrocomputer 2 sodann weiterhin die Ausgänge 22 und 23 nacheinander auf 24 V schaltet.

Aufgrund der Tatsache, dass der Ausgang 18 mit dem Eingang 15 und der Ausgang 19 mit dem Eingang 16 verbunden ist, erfährt der Mikrocomputer 2 des Sicherheitsschaltgerätes 1, dass als Meldegerät ein zweipoliger NOT-AUS-Taster 28b angeschlossen ist.

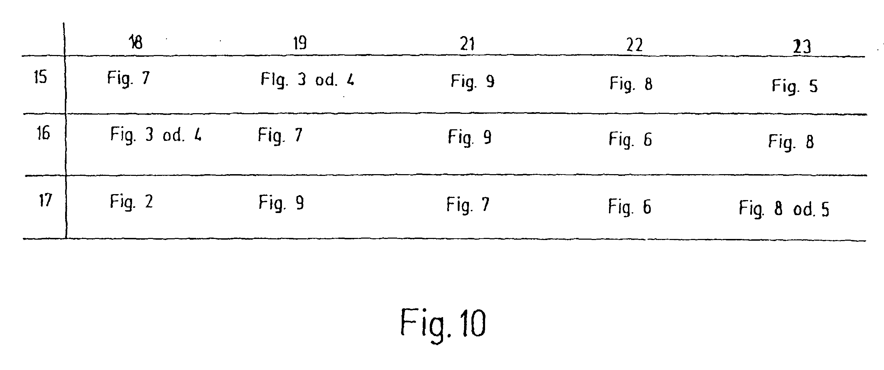

Die oben beschriebene Erkennungsroutine läuft sodann als nächstes über den Mikrocomputer 2' ab und die beiden Mikrocomputer 2 und 2' vergleichen anschließend ihre Prüfergebnisse. Wenn diese Prüfergebnisse miteinander übereinstimmen und mit einer weiter unten noch erläuterten Tabelle gemäß Fig. 10 konform sind, werden als nächstes die beiden für das Meldegerät 28b benötigten Ausgänge 18 und 19 wiederum auf 24 V geschaltet und bleiben solange auf 24 V, bis die Versorgungsspannung für das Sicherheitsschaltgerät 1 ausgeschaltet wird.

Da die beiden Mikrocomputer 2 und 2' nunmehr wissen, dass der NOT-AUS-Taster 28b ordnungsgemäß angeschlossen ist und auch dessen beide Schalterkontakte 29, 31 geschlossen sind, veranlassen die Mikrocomputer 2 und 2' ein Umschalten der zugehörigen Ausgangsrelais 26 und 26'. Die Arbeitskontakt 27 und 27' werden geschlossen, womit beispielsweise für eine Presse der Pressenstromkreis eingeschaltet wird.

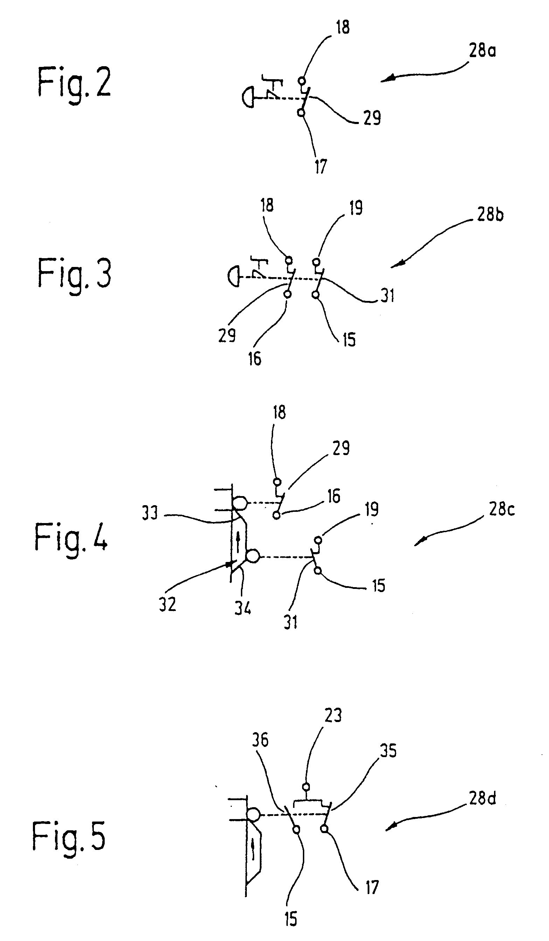

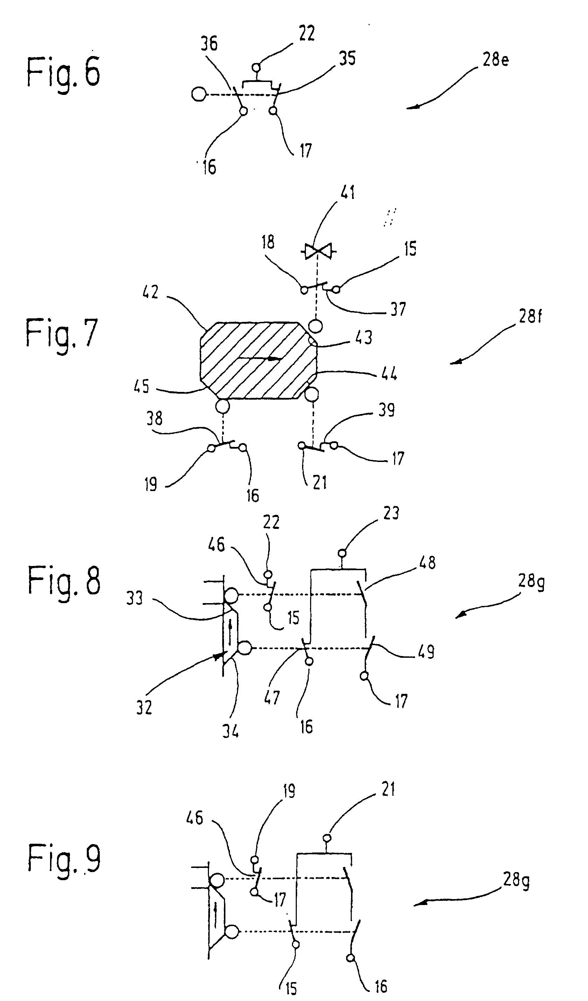

In den Fig. 2 bis 9 ist der Satz von Meldegeräten 28 veranschaulicht, die an das Sicherheitsschaltgerät 1 anschließbar sind. Dabei werden in den Fig. 2 bis 9 die Enden der Schalterkontakte mit den Bezugszeichen 15 bis 17 und 18 bis 23 versehen, um zu symbolisieren, an welchen Ein- bzw. Ausgang des Sicherheitsschaltgerätes 1 der betreffende Schalterkontakt jeweils anzuschließen ist.

Fig. 3 zeigt das Meldegerät 28b, das im Zusammenhang mit Fig. 1 im Einzelnen erläutert ist. Wie zu erkennen ist, ist der Ruhekontaktschalter 29 mit dem Ausgang 18 und dem Eingang 16 verbunden, während der Ruhekontaktschalter 31, wie durch die Bezugszeichen 15 und 19 symbolisiert ist, mit dem Eingang 15 und dem Ausgang 19 zu verschalten ist.

Ein noch einfacheres Meldegerät (= signalling devices) als das Meldegerät 28b ist in Fig. 2 als Meldegerät 28a veranschaulicht. Dieses Meldegerät 28a ist ein einkanaliger NOT-AUS-Taster und er enthält lediglich den Ruhekontaktschalter 29. Dieser wird an den Eingang 17 und den Ausgang 18 angeschlossen.

Fig. 4 zeigt ein Meldegerät 28c zur Überwachung von Schutztüren mit zwei voneinander unabhängig zu betätigenden Schaltern 29 und 31, von denen der Schalter 29 ein Ruhekontaktschalter und der Schalter 31 ein Arbeitskontaktschalter ist, der bei geschlossener Tür ebenfalls geschlossen ist. Diese beiden Schalter 29 und 31 werden mit Hilfe eines Nockens 32 betätigt, und zwar in der Weise, dass eine auflaufende Nockenflanke 33 den Ruhekontaktschalter 29 öffnet. Eine weitere abfallende Nockenflanke 34 hingegen öffnet den Arbeitskontaktschalter 31 über ein entsprechendes Nockenfolgeglied.

Obwohl das Meldegerät 28c dieselbe Art von Kontakten hat wie das Meldegerät 28b, wird es doch zu einem anderen Zweck verwendet. Gleichwohl wertet das Sicherheitsschaltgerät 1 die beiden Meldegeräte 28b und 28c in der gleichen. Weise aus, weshalb die Ruhekontaktschalter 29 und 31 des Meldegeräts 28c in derselben Weise mit dem Sicherheitsschaltgerät 1 verbunden werden wie das Meldegerät 28b.

Das Meldegerät 28c wird bei hohem Sicherheitsniveau verwendet und gestattet eine Querschlusserkennung zwischen den Adern in der Verbindungsleitung entweder zu den Eingängen 15 und 16 oder der Verbindungsleitung zu den Ausgängen 18 und 19. Derartige Sicherheitsschalter werden für Schutztüren im Bedienbereich verwendet.

Fig. 5 zeigt ein Meldegerät 28d, ebenfalls zur Schutztürüberwachung, mit einem zwangsöffnenden Ruhekontaktschalter 35 und einem Arbeitskontaktschalter 36, die mechanisch miteinander so gekoppelt sind, dass sie nur gemeinsam betätigt werden können. Diese Art von Meldegerät gestattet eine Unterscheidung zwischen offener Schutztür und fehlerhafter Verdrahtung.

Es liegt deswegen der gemeinsame Anschluss des Ruhekontaktschalters 35 und des Arbeitskontakschalters 36 an dem Ausgang 23, während die Arbeitskontaktschalter 36 mit dem Eingang 15 und die Ruhekontaktschalter 35 mit dem Eingang 17 verbunden ist.

Fig. 6 zeigt ein Meldegerät 28e, das ähnlich wirkt wie das Meldegerät 28d, jedoch eine Anlauftestung erzwingen soll. Demzufolge soll sich das Sicherheitsschaltgerät 1 anders verhalten, in dem Sinne, dass die Ausgangsrelais 27 und 27' erst dann in den Zustand mit geschlossenen Kontakten übergehen, wenn wenigstens einmal nach der Netzeinschaltung die überwachte Schutztür betätigt wurde. Um dies zu erreichen, sind die Ruhekontaktschalter 35 und der Arbeitskontaktschalter 36 mit ihrem gemeinsamen Anschluss an dem Ausgang 22 angeschaltet und liegen an den Eingängen 16 und 17.

Fig. 7 zeigt ein Meldegerät 28f als Schutztürsicherheitsschalter mit drei Positionsschaltern für Abdeckungen und Schutzeinrichtungen mit zwei getrennten Verriegelungssystemen. Das Meldegerät 28f weist einen Ruhekontaktschalter 37, einen Arbeitskontaktschalter 38, der bei geschlossener Tür betätigt ist, und einen Ruhekontaktschalter 39 auf. Der Ruhekontaktschalter 37 steht mechanisch mit einem Fluidabsperrventil 41 in Verbindung, so dass eine Betätigung des Ruhekontaktschalters 37 mit einer Betätigung des Absperrventils 41 gleichbedeutend ist. Derartige Meldegeräte werden z.B. bei Schutztüren von Spritzgießmaschinen oder Blasformmaschinen verwendet.

Sämtliche Schalter 37, 38 und 39 werden über einen gemeinsamen Nocken 42 bewegt, und zwar werden die Ruhekontaktschalter 37 und 39 von auflaufenden Flanken 43 und 44 und der Arbeitskontaktschalter 38 von einer ablaufenden Nockenflanke 45 betätigt.

Damit das Sicherheitsschaltgerät 1 eindeutig erkennen kann, dass ein Meldegerät 28f angeschlossen ist, liegt der Ruhekontaktschalter 37 zwischen dem Ausgang 18 und dem Eingang 15, der Arbeitskontaktschalter 38 zwischen dem Ausgang 19 und dem Eingang 16 und der Ruhekontaktschalter 39 zwischen dem Ausgang 21 und dem Eingang 17.

Die Fig. 8 und 9 zeigen ein Meldegerät 28g, das einen Ruhekontaktschalter 46, einen Arbeitskontaktschalter 47, der bei geschlossener Tür betätigt ist, und zwei Arbeitskontaktschalter 48 und 49 enthält, die bei geschlossener Tür geöffnet sind. Die beiden Arbeitskontaktschalter 48 und 49 sind in Serie geschaltet. Mechanisch dagegen besteht eine Verbindung zwischen dem Arbeitskontaktschalter 48 und dem Ruhekontaktschalter 46, in dem Sinne, dass diese beiden Schalter zwangsläufig gemeinsam betätigt werden, während dem Arbeitskontaktschalter 49 und dem Arbeitskontaktschalter 47 eine eigene mechanische Betätigung zugeordnet ist und auch diese beiden Schalter miteinander zwangsgekoppelt sind. Die Betätigung erfolgt durch einen Nocken 32, wie er bereits im Zusammenhang mit Fig. 4 gezeigt ist, wobei die auflaufende Nockenflanke 33 den Ruhekontaktschalter 46 und den Arbeitskontaktschalter 48 betätigt, während die ablaufende Nockenflanke 34 für das Umschalten des Arbeitskontaktschalters 47 und des Arbeitskontaktschalters 49 sorgt.

Da die Anordnung nach Fig. 8 für einen automatischen Start nach dem Netzeinschalten sorgen soll, muss das Sicherheitsschaltgerät 1 die Anordnung nach Fig. 8 von der Anordnung nach Fig. 9 unterscheiden können, die eine Anlauftestung erzwingen soll, d.h. nach dem Einschalten der Betriebsspannung muss die Schutztür einmal betätigt werden, um sicherzugehen, dass das Meldegerät 28g auch ordnungsgemäß arbeitet. Demzufolge muss sich das Sicherheitsgerät 1 unterschiedlich verhalten, weshalb die Verbindung mit den Ein- und Ausgängen, wie dargestellt, erfolgt. Ohne Anlauftestung ist das Meldegerät 28g einerseits mit den Ausgängen 22 und 23 und andererseits mit den Eingängen 15, 16 und 17 verbunden, während dann, wenn eine Anlauftestung gewünscht wird, dasselbe Meldegerät 28g mit den Ausgängen 19 und 21 sowie den Eingängen 15, 16 und 17 zu verbinden ist.

In Fig. 10 ist eine Tabelle gezeigt, die wiedergibt, wie die unterschiedlichen Meldegeräte 28a bis 28g mit den unterschiedlichen Eingängen 15, 16 und 17 sowie den Ausgängen 18...23 zu verbinden sind. Ersichtlicherweise ergibt es eine ein-eindeutige Zuordnung, in dem Sinne, dass das Sicherheitsschaltgerät 1 klar erkennen kann, welches Meldegerät 28 angeschlossen ist und wie es im Bedarfsfalle reagieren soll.

In der Tabelle sind die Spalten mit dem Bezugszeichen des betreffenden Ausgangs versehen und die Zeilen mit den Bezugszeichen des entsprechenden Eingangs. In den einzelnen Tabellenplätzen stehen die entsprechenden Figuren, in denen die jeweiligen Meldegeräte veranschaulicht sind.

Wenn z.B. bei der oben erläuterten Erkennungsroutine das Sicherheitsschaltgerät 1 feststellt, dass der Ausgang 18 mit dem Eingang 15, der Ausgang 19 mit dem Eingang 16 und der Ausgang 21 mit dem Eingang 17 verbunden ist, sonst aber keine Verbindung existiert, ergibt sich für das Sicherheitsschaltgerät 1 eindeutig die Beschaltung mit dem Meldegerät 28f in der in Fig. 7 gezeigten Weise. Dementsprechend muss die hierfür erforderliche Schaltfunktion ausgeführt werden.

Würde dagegen lediglich eine Verbindung zwischen dem Ausgang 18 und dem Eingang 15 sowie dem Ausgang 19 und dem Eingang 16 erkannt werden, würde eine fehlerhafte Beschaltung vorliegen, da sich keine zulässige vollständige Belegung der Ein- und Ausgänge ergibt. Das Sicherheitsschaltgerät 1 würde im gesperrten Zustand verbleiben.

Als weiteres Beispiel sei angenommen, das Sicherheitsschaltgerät erkennt eine Verbindung zwischen dem Ausgang 18 und dem Eingang 16 sowie dem Ausgang 19 und dem Eingang 15, was an sich der Beschaltung nach Fig. 4 bzw. Fig. 3 entsprechen würde und zusätzlich wegen eines Querschlusses in dem Verbindungskabel 33 eine Verbindung zwischen dem Ausgang 18 und dem Eingang 15 sowie zwischen dem Ausgang 19 und dem Eingang 16. Damit wären mehr Verbindungen hergestellt als dies nach Fig. 3 zulässig wäre, weshalb auch in diesem Falle das Sicherheitsschaltgerät 1 auf Störung geht, weil nicht nur die zulässigen Tabellenplätze erfüllt sind, sondern darüber hinaus weitere Tabellenplätze, die einander ausschließen.

Wie sich aus der Erläuterung ergibt, kann mit lediglich fünf Ausgängen und drei Eingängen ein Sicherheitsschaltgerät 1 realisiert werden, das insgesamt acht unterschiedliche Beschaltungen durch Meldegeräte verarbeiten kann, ohne dass eine Umprogrammierung oder die Verwendung von Brücken bzw. Jumpern notwendig ist, bzw sich unterschiedlich verhalten soll. Allein durch Verbinden mit den entsprechenden Ein- und Ausgängen wählt das Sicherheitsschaltgerät 1 die richtige Funktion aus. Somit besteht eine erhöhte Sicherheit sowohl gegen fehlerhaftes Anschließen als auch während des späteren Betriebs. Die Anschlussverbindungen sind üblicherweise Schraubverbindungen und werden, nachdem sie einmal geschaltet sind, nicht mehr geöffnet.

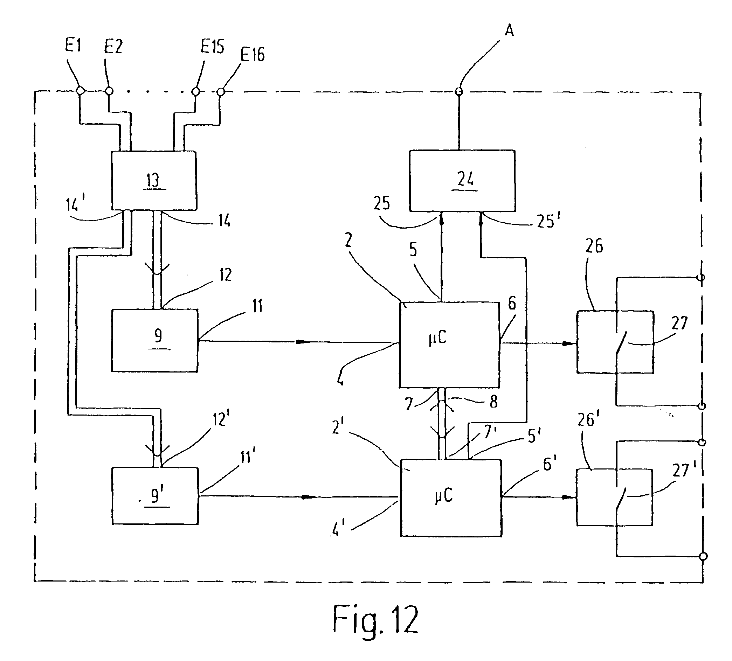

Anstatt, wie in Fig. 1 gezeigt, eine Kombination aus mehreren Aus- und mehreren Eingängen zu verwenden, kann die Programmierung des Sicherheitsschaltgerätes 1 auch durch die Verwendung lediglich eines Ausgangs und mehreren Eingängen oder durch die Verwendung eines Eingangs und mehreren Ausgänge erfolgen. Um die verschiedenen Fälle nach Fig. 2 bis Fig. 9 unterscheiden zu können, kann z.B. ein Sicherheitsschaltgerät mit sechzehn Ausgängen A1...A16 und einem Eingang E oder sechzehn Eingängen E1...E16 und einem Ausgang A verwendet werden. Derartige Sicherheitsschaltgeräte sind in den Fig. 12 und 13 gezeigt; sie arbeiten ansonsten im Wesentlichen wie oben erläutert.

Ein modulares Sicherheitsschaltgerät ist dazu eingerichtet, dass unterschiedliche Meldegeräte (= signalling devices) eines Satzes von möglichen anschließbaren Meldegeräten angeschaltet werden können. Dabei ist für jedes Meldegerät des Satzes eine typische Kombination von verwendeten. Ein- und Ausgängen vorgesehen. Die Art der Anschaltung des Meldegerätes ist für jedes Meldegerät innerhalb des Satzes ein-eindeutig, womit das Sicherheitsschaltgerät beim Anlauf aufgrund der geschlossenen galvanischen Verbindungen erkennen kann, welche Art von Meldegerät angeschlossen ist bzw. welche Funktion bei gleichen Meldegeräten erforderlich ist. Entsprechend dieser Zuordnung steuert sich das Sicherheitsschaltgerät selbsttätig in den erforderlichen Betriebsmodus.

## Patentansprüche

1. Sicherheitsschaltgerät (1) zur Überwachung von Anlagenbetriebszuständen, das zum Anschluss wenigstens eines Meldegeräts (28) eingerichtet ist, das wenigstens zwei Schaltzustände aufweist, wobei das Meldegerät (28) aus einem Satz von Meldegeräten (28a...28g) ausgewählt ist, die zum Anschluss an das Sicherheitsschaltgerät (1) vorgesehen sind und die unterschiedliche Anzahlen von Ruheund/oder Arbeitskontakten (29,31,35,36,37,38,39,46,47,48) aufweisen,
mit einem Satz von Eingängen (E1..E16), an die die Meldegeräte (28) anschließbar sind, wobei festgelegte Eingänge (E1..E16) bestimmten Meldegeräten (28) zugeordnet sind,
mit wenigstens einem Ausgang (A), der für mehrere Meldegeräte (28) gemeinsam vorgesehen ist, und
mit einer Erkennungseinrichtung (2) zum Erkennen des jeweiligen Meldegeräts (28) aus dem Satz der möglichen Meldegeräte (28a...28g).

2. Sicherheitsschaltgerät (1) zur Überwachung von Anlagenbetriebszuständen, das zum Anschluss wenigstens eines Meldegeräts (28) eingerichtet ist, das wenigstens zwei Schaltzustände aufweist, wobei das Meldegerät (28) aus einem Satz von Meldegeräten (28a...28g) ausgewählt ist, die zum Anschluss an das Sicherheitsschaltgerät (1) vorgesehen sind und die unterschiedliche Anzahlen von Ruheund/oder Arbeitskontakten (29,31,35,36,37,38,39,46,47,48) aufweisen,
mit wenigstens einem Eingang (E), der für mehrere Meldegeräte (28) gemeinsam vorgesehen ist, und
mit einem Satz von Ausgängen (A1...A16), an die die Meldegeräte (28) anschließbar sind, wobei festgelegte Ausgänge (18...23) bestimmten Meldegeräten (28) zugeordnet sind,
mit einer Erkennungseinrichtung (2) zum Erkennen des jeweiligen Meldegeräts (28) aus dem Satz der möglichen Meldegeräte (28a...28g).

3. Sicherheitsschaltgerät (1) zur Überwachung von Anlagenbetriebszuständen, das zum Anschluss wenigstens eines Meldegeräts (28) eingerichtet ist, das wenigstens zwei Schaltzustände aufweist, wobei das Meldegerät (28) aus einem Satz von Meldegeräten (28a...28g) ausgewählt ist, die zum Anschluss an das Sicherheitsschaltgerät (1) vorgesehen sind und die unterschiedliche Anzahlen von Ruheund/oder Arbeitskontakten (29,31,35,36,37,38,39,46,47,48) aufweisen,
mit einem Satz von Eingängen (15..17), an die die Meldegeräte (28) anschließbar sind, wobei festgelegte Eingänge (15..17) bestimmten Meldegeräten (28) zugeordnet sind,
mit einem Satz von Ausgängen (18..23), an die die Meldegeräte (28) anschließbar sind, wobei festgelegte Ausgänge (18..23) bestimmten Meldegeräten (28) zugeordnet sind, und
mit einer Erkennungseinrichtung (2) zum Erkennen des jeweiligen Meldegeräts (28) aus dem Satz der möglichen Meldegeräte (28a...28g).

4. Sicherheitsschaltgerät nach einem der Ansprüche 1 bis 3, **dadurch gekennzeichnet, dass** die Erkennungseinrichtung (2) ein Meldegerät (28) erkennt, indem sämtliche Eingänge (15..17) des Satzes von Eingängen (15..17) und/oder sämtliche Ausgänge (18...23) des Satzes von Ausgängen (18.. .23) überprüft werden und die als beschaltet erkannten Eingänge (15..17) und/oder Ausgänge (18..23) mit einer Tabelle (Fig.10) verglichen werden, die die Zuordnung zwischen den jeweiligen Eingängen (15..17) und/oder Ausgängen (18..23) des Satzes und den zu den betreffenden Eingängen (15..17) und/oder Ausgängen (18..23) gehörenden Meldegeräten (28a...28g) des Satzes enthält.

5. Sicherheitsschaltgerät nach einem der Ansprüche 1 bis 3, **dadurch gekennzeichnet, dass** die Erkennungseinrichtung (2) dazu eingerichtet ist, zu prüfen, ob das Meldegerät (28) an den- oder diejenigen Eingänge (15..17) und/oder Ausgänge (18..23) des Satzes von Eingängen (15..17) und/oder Ausgängen (18..23) angeschlossen ist, die für das betreffende Meldegerät (28) vorgesehen sind.

6. Sicherheitsschaltgerät nach einem der Ansprüche 1 bis 3, **dadurch gekennzeichnet, dass** der Satz von Meldegeräten (28a...28g) ein Meldegerät (28a) in Gestalt eines einfachen Ruhekontaktschalters (29) enthält.

7. Sicherheitsschaltgerät nach einem der Ansprüche 1 bis 3, **dadurch gekennzeichnet, dass** der Satz von Meldegeräten (28a...28g) ein Meldegerät (28b) mit wenigstens zwei Ruhekontaktschaltern (29,31) enthält.

8. Sicherheitsschaltgerät nach Anspruch 7, **dadurch gekennzeichnet, dass** die wenigstens zwei Ruhekontaktschalter ()29,31 miteinander zwangsgekoppelt sind.

9. Sicherheitsschaltgerät nach einem der Ansprüche 1 bis 3, **dadurch gekennzeichnet, dass** der Satz von Meldegeräten (28a...28g) eine Meldegerät (28c,28d) mit wenigstens einem Ruhekontaktschalter (35) und wenigstens einem Arbeitskontaktschalter (36) enthält.

10. Sicherheitsschaltgerät nach Anspruch 9, **dadurch gekennzeichnet, dass** der wenigstens eine Ruhekontaktschalter ()35 und der wenigstens eine Arbeitskontaktschalter (36) mechanisch miteinander zwangsgekoppelt sind.

11. Sicherheitsschaltgerät nach einem der Ansprüche 1 bis 3, **dadurch gekennzeichnet, dass** der Satz von Meldegeräten (28a...28g) ein Meldegerät (28f) mit drei Ruhekontaktschaltern (37,38,39) enthält, die gegebenenfalls über einen Nocken (42) gesteuert sind.

12. Sicherheitsschaltgerät nach Anspruch 11, **dadurch gekennzeichnet, dass** einer der drei Ruhekontaktschalter (37) mit einem Fluidventil (41) mechanisch gekoppelt ist.

13. Sicherheitsschaltgerät nach einem der Ansprüche 1 bis 3, **dadurch gekennzeichnet, dass** der Satz von Meldegeräten (28a...28g) ein Meldegerät (28g) mit wenigstens zwei Sätzen von Schaltern (46,47;48,49) enthält, von denen der eine ein Ruhekontaktschalter (46,49) und der andere ein Arbeitskontaktschalter (47,48) ist, und dass die Schalter (46,47;48,49) eines Satzes mechanisch miteinander zwangsgekoppelt sind.

14. Sicherheitsschaltgerät nach einem der Ansprüche 1 bis 3, **dadurch gekennzeichnet**, däss es mehrkanalig ausgeführt ist und dass es in jedem Kanal eine zugehörige Erkennungseinrichtung (2,2') aufweist.

15. Sicherheitsschaltgerät nach einem der Ansprüche 1 bis 3, **dadurch gekennzeichnet, dass** es eine Initialisierungseinrichtung (2) enthält, die durch ein Wiederkehren der Versorgungsspannung aktiviert wird und mit der Erkennungseinrichtung (2) verbunden ist, um diese zu veranlassen, die Beschaltung der Eingänge (15..17) und/oder Ausgänge (18..23) mit den Meldegeräten (28) zu überprüfen.

16. Sicherheitsschaltgerät nach einem der Ansprüche 1 bis 3, **dadurch gekennzeichnet, dass** es wenigstens einen Mikroprozessor (2,2') enthält, in dem die Erkennungseinrichtung und/oder die Initialisierungseinrichtung als Programm verwirklicht ist bzw sind.

## Claims

1. A safety switching device (1) for monitoring system operating states, which is set up for the connection of at least one signaling device (28) which has at least two switching states, the signaling device (28) being selected from a set of signaling devices (28a...28g) which are intended for connection to the safety switching device (1) and which have different numbers of break and/or make contacts (29, 31, 35, 36, 37, 38, 39, 46, 47, 48),
having a set of inputs (E1...E16) to which the signaling devices (28) can be connected, defined inputs (E1...E16) being assigned to specific signaling devices (28),
having at least one output (A), which is provided jointly for a plurality of the signaling devices (28), and
having an identification device (2) for identifying the respective signaling device (28) from the set of possible signaling devices (28a...28g).

2. A safety switching device (1) for monitoring system operating states, which is set up for the connection of at least one signaling device (28), which has at least two switching states, the signaling device (28) being selected from a set of signaling devices (28a...28g) which are intended for connection to the safety switching device (1) and which have different numbers of break and/or make contacts (29, 31, 35, 36, 37, 38, 39, 46, 47, 48),
having at least one input (E) which is provided jointly for a plurality of signaling devices (28), and
having a set of outputs (A1...A16) to which the signaling devices (28) can be connected, defined outputs (28...23) being designed to specific signaling devices (28),
having an identification device (2) for identifying the respective signaling device (28) from the set of possible signaling devices (28a...28g).

3. A safety switching device (1) for monitoring system operating states, which is set up for the connection of at least one signaling device (28), which has at least two switching states, the signaling device (28) being selected from a set of signaling devices (28a...28g) which are intended for connection to the safety switching device (1) and which have different numbers of break and/or make contacts (29, 31, 35, 36, 37, 38, 39, 46, 47, 48),
having a set of inputs (15...17) to which the signaling devices (28) can be connected, defined inputs (15...17) being assigned to specific signaling devices (28),
having a set of outputs (18...23) to which the signaling devices (28) can be connected, defined outputs (18...23) being assigned to specific signaling devices (28), and
having an identification device (2) for identifying the respective signaling device (28) from the set of possible signaling devices (28a...28g).

4. The safety switching device as claimed in one of claims 1 to 3, **characterized in that** the identification device (2) identifies a signaling device (28) by checking all the inputs (15...17) of the set of inputs (15...17) and/or all the outputs (18...23) of the set of outputs (18...23), and by comparing with a table (Fig. 10) those inputs (15...17) and/or outputs (18...23) which have been identified as being connected, which table contains the association between the respective inputs (15...17) and/or outputs (18...23) of the set and those signaling devices (28a...28g) in the set which are associated with relevant inputs (15...17) and/or outputs (18...23).

5. The safety switching device as claimed in one of claims 1 to 3, **characterized in that** the identification device (2) is set up in order to test whether the signaling device (28) is connected to that or those inputs (15...17) and/or outputs (18...23) of the set of inputs (15...17) and/or outputs (12...23) which are intended for the relevant signaling device (28).

6. The safety switching device as claimed in one of claims 1 to 3, **characterized in that** the set of signaling devices (28a...28g) includes a signaling device (28a) in the form of a simple break contact switch (29).

7. The safety switching device as claimed in one of claims 1 to 3, **characterized in that** the set of signaling devices (28a...28g) includes a signaling device (28b) having at least two break contact switches (29, 31).

8. The safety switching device as claimed in claim 7, **characterized in that** the at least two break contact switches (29, 31) are positively coupled to one another.

9. The safety switching device as claimed in one of claims 1 to 3, **characterized in that** the set of signaling devices (28a...28g) includes a signaling device (28c, 28d) having at least one break contact switch (35) and having at least one make contact switch (36).

10. The safety switching device as claimed in claim 9, **characterized in that** the at least one break contact switch (35) and the at least one make contact switch (36) are mechanically positively coupled to one another.

11. The safety switching device as claimed in one of claims 1 to 3, **characterized in that** the set of signaling devices (28a...28g) includes a signaling device (28f) having three break contact switches (37, 38, 39) which may be controlled via a cam (42).

12. The safety switching device as claimed in claim 11, **characterized in that** one of the three break contact switches (37) is mechanically coupled to a fluid valve (41).

13. The safety switching device as claimed in one of claims 1 to 3, **characterized in that** the set of signaling devices (28a...28g) includes a signaling device (28g) having at least two sets of switches (46, 47; 48, 49), one of which is a break contact switch (46, 49) and the other of which is a make contact switch (47, 48), and wherein the switches (46, 47; 48, 49) in a set are mechanically positively coupled to one another.

14. The safety switching device as claimed in one of claims 1 to 3, **characterized in that** the switching device is designed with a plurality of channels and wherein the switching device has an associated identification device (2, 2') in each channel.

15. The safety switching device as claimed in one of claims 1 to 3, **characterized in that** it includes an initialization device (2) which is activated by the return of the supply voltage and is connected to the identification device (2) in order to cause the connection of the inputs (15...17) and/or outputs (18...23) to the signaling devices (28) to be checked.

16. The safety switching device as claimed in one of claims 1 to 3, **characterized in that** it includes at least one microprocessor (2, 2') in which the identification device and/or the initialization device is/are implemented as a program.

## Revendications

1. Dispositif de commutation de sécurité (1) pour la surveillance d'états de service d'installations, qui est conçu pour le branchement d'au moins un appareil de signalement (28) qui présente au moins deux états de commutation, l'appareil de signalement (28) étant choisi parmi un ensemble d'appareils de signalement (28a ... 28g) qui sont prévus pour se brancher sur le dispositif de commutation de sécurité (1) et qui présentent des nombres différents de contacts de travail et/ou de repos (29, 31, 35, 36, 37, 38, 39, 46, 47, 48),
avec un jeu d'entrées (E1 ... E16) sur lesquelles peuvent se brancher les appareils de signalement (28), des entrées définies (E1 ... E16) étant associées à certains appareils de signalement (28),
avec au moins une sortie (A) qui est prévue de manière commune pour plusieurs appareils de signalement (28), et
avec un dispositif de reconnaissance (2) pour reconnaître l'appareil de signalement (28) respectif parmi l'ensemble des appareils de signalement possibles (28a ... 28g).

2. Dispositif de commutation de sécurité (1) pour la surveillance d'états de service d'installations, qui est conçu pour le branchement d'au moins un appareil de signalement (28) qui présente au moins deux états de commutation, l'appareil de signalement (28) étant choisi parmi un ensemble d'appareils de signalement (28a ... 28g) qui sont prévus pour se brancher sur le dispositif de commutation de sécurité (1) et qui présentent des nombres différents de contacts de travail et/ou de repos (29, 31, 35, 36, 37, 38, 39, 46, 47, 48),
avec au moins une entrée (E) qui est prévue de manière commune pour plusieurs appareils de signalement (28), et
avec un ensemble de sorties (A1 ... A16) sur lesquelles peuvent se brancher les appareils de signalement (28), des sorties définies (A1 ... A16) étant associées à certains appareils de signalement (28),
avec un dispositif de reconnaissance (2) pour reconnaître l'appareil de signalement (28) respectif parmi l'ensemble des appareils de signalement possibles (28a ... 28g).

3. Dispositif de commutation de sécurité (1) pour la surveillance d'états de service d'installations, qui est conçu pour le branchement d'au moins un appareil de signalement (28) qui présente au moins deux états de commutation, l'appareil de signalement (28) étant choisi parmi un ensemble d'appareils de signalement (28a ... 28g) qui sont prévus pour se brancher sur le dispositif de commutation de sécurité (1) et qui présentent des nombres différents de contacts de travail et/ou de repos (29, 31, 35, 36, 37, 38, 39, 46, 47, 48),
avec un jeu d'entrées (E1 ... E16) sur lesquelles peuvent se brancher les appareils de signalement (28), des entrées définies (E1 ... E16) étant associées à certains appareils de signalement (28),
avec un ensemble de sorties (A1 ... A16) sur lesquelles peuvent se brancher les appareils de signalement (28), des sorties définies (A1 ... A16) étant associées à certains appareils de signalement (28), et
avec un dispositif de reconnaissance (2) pour reconnaître l'appareil de signalement (28) respectif parmi l'ensemble des appareils de signalement possibles (28a ... 28g).

4. Dispositif de commutation de sécurité selon l'une des revendications 1 à 3, **caractérisé en ce que** le dispositif de reconnaissance (2) reconnait un appareil de signalement (28) en contrôlant toutes les entrées (15 ... 17) de l'ensemble d'entrées (15 ... 17) et/ou toutes les sorties (18 ... 23) de l'ensemble de sorties (18 ... 23) et en comparant les entrées (15 ... 17) et/ou sorties (18 ... 23) détectées comme branchées avec un tableau (fig. 10) qui contient l'association entre les entrées (15 ... 17) et/ou sorties (18 ... 23) respectives de l'ensemble et appareils de signalement (28a ... 28g) de l'ensemble appartenant aux entrées (15 ... 17) et/ou sorties (18 ... 23) concernées.

5. Dispositif de commutation de sécurité selon l'une des revendications 1 à 3, **caractérisé en ce que** le dispositif de reconnaissance (2) est conçu pour vérifier si l'appareil de signalement (28) est raccordé à la ou aux entrées (15 ... 17) et/ou sorties (18 ... 23) de l'ensemble d'entrées (15 ... 17) et/ou de sorties (18 ... 23) qui sont prévues pour l'appareil de signalement (28) concerné.

6. Dispositif de commutation de sécurité selon l'une des revendications 1 à 3, **caractérisé en ce que** l'ensemble d'appareils de signalement (28a ... 28g) contient un appareil de signalement (28a) de la forme d'un simple commutateur à contact de repos (29).

7. Dispositif de commutation de sécurité selon l'une des revendications 1 à 3, **caractérisé en ce que** l'ensemble d'appareils de signalement (28a ... 28g) contient un appareil de signalement (28b) avec au moins deux commutateurs à contact de repos (29, 31).

8. Dispositif de commutation de sécurité selon la revendication 7, **caractérisé en ce que** les commutateurs à contact de repos (29, 31) au nombre d'au moins deux sont couplés l'un à l'autre de manière forcée.

9. Dispositif de commutation de sécurité selon l'une des revendications 1 à 3, **caractérisé en ce que** l'ensemble d'appareils de signalement (28a ... 28g) contient un appareil de signalement (28c, 28d) avec au moins un commutateur à contact de repos (35) et au moins un commutateur à contact de travail (36).

10. Dispositif de commutation de sécurité selon la revendication 9, **caractérisé en ce que** le commutateur à contact de repos (35) au nombre d'au moins un et le commutateur à contact de travail (36) au nombre d'au moins un sont couplés l'un à l'autre de manière forcée.

11. Dispositif de commutation de sécurité selon l'une des revendications 1 à 3, **caractérisé en ce que** l'ensemble d'appareils de signalement (28a ... 28g) contient un appareil de signalement (28f) avec trois commutateurs à contact de repos (37, 38, 39), qui sont commandés le cas échéant par l'intermédiaire d'une came (42).

12. Dispositif de commutation de sécurité selon la revendication 11, **caractérisé en ce que** l'un des trois commutateurs à contact de repos (37) est couplé mécaniquement à une vanne de fluide (41).

13. Dispositif de commutation de sécurité selon l'une des revendications 1 à 3, **caractérisé en ce que** l'ensemble d'appareils de signalement (28a ... 28g) contient un appareil de signalement (28g) avec au moins deux ensembles de commutateurs (46, 47 ; 48, 49), dont l'un est un commutateur à contact de repos (46, 49) et l'autre est un commutateur à contact de travail (47, 48), et **en ce que** les commutateurs (46, 47 ; 48, 49) d'un ensemble sont couplés mécaniquement entre eux de manière forcée.

14. Dispositif de commutation de sécurité selon l'une des revendications 1 à 3, **caractérisé en ce qu'**il est réalisé avec plusieurs canaux et **en ce qu'**il présente sur chaque canal un dispositif de reconnaissance (2, 2') associé.

15. Dispositif de commutation de sécurité selon l'une des revendications 1 à 3, **caractérisé en ce qu'**il contient un dispositif d'initialisation (2), qui est activé par un retour de la tension d'alimentation et est relié au dispositif de reconnaissance (2), afin de conduire celui-ci à vérifier le montage des entrées (15 ... 17) et/ou sorties (18 ... 23) avec les appareils de signalement (28).

16. Dispositif de commutation de sécurité selon l'une des revendications 1 à 3, **caractérisé en ce qu'**il comprend au moins un microprocesseur (2, 2'), dans lequel le dispositif de reconnaissance et/ou le dispositif d'initialisation est/sont réalisé(s) sous forme de programme.
